(19) Europäisches Patentamt
European Patent Office
Office européen des brevets

(11) Publication number: 0 107 929
A2

(12) # EUROPEAN PATENT APPLICATION

(21) Application number: 83305962.9

(22) Date of filing: 30.09.83

(51) Int. Cl.³: C 08 F 8/26
C 08 F 210/12

(30) Priority: 30.09.82 US 429140

(43) Date of publication of application: 09.05.84 Bulletin 84/19

(84) Designated Contracting States: BE DE FR GB IT NL

(71) Applicant: Exxon Research and Engineering Company
P.O.Box 390 180 Park Avenue
Florham Park New Jersey 07932(US)

(72) Inventor: Baldwin, Francis Paul
PO Box 2094W
320 North Coupeville Washington(US)

(74) Representative: Dew, Melvyn John
Esso Chemical Ltd. Esso Chemical Research Centre P.O. Box 1
Abingdon Oxfordshire, OX13 6BB(GB)

(54) **Process for producing butyl rubber.**

(57) Process for the preparation of an elastomeric polymer having randomly distributed conjugated diolefin moieties in which a part, or all, of the moieties comprising the conjugated diolefin have at least one double bond of the pair of double bonds comprising the conjugated diolefin unsaturation located in the chain of carbon atoms comprising the polymer backbone, or are in a ring of carbon atoms integral with said chain of carbon atoms, comprises heating a reaction mixture comprising a solution of a halogenated butyl rubber in a non-reactive solvent with a reagent comprising the reaction product of zinc oxide or zinc hydroxide and a $C_5$ to $C_{18}$ acyclic or alicyclic carboxylic acid, prepared in situ in the non-reactive solvent from the said zinc compounds and acids, in a reaction zone while continuously removing water from said reaction zone by physically entraining water from the reaction zone.

EP 0 107 929 A2

PROCESS FOR PRODUCING BUTYL RUBBER

This invention relates to a novel process for the dehydrohalogenation of halogenated butyl rubber for the preparation of conjugated-diene butyl rubber having randomly distributed sites of unsaturation in which at least one double bond of the pair of double bonds comprising the diolefin unsaturation is located in the chain of carbon atoms comprising the polymer backbone, or is in a ring of carbon atoms which is integral with said backbone.

The expression "Butyl Rubber" is used in the rubber industry as a generic term to describe elastomeric polymers prepared from a polymerization reaction mixture having therein from about 70 to 99.5 weight percent of one or more $C_4$ to $C_7$ isoolefins, e.q., isobutene, 2-methylbutene-1, and about 30 to 0.5 weight percent of one or more $C_4$ to $C_{14}$ acyclic or alicyclic conjugated multiolefins, e.q., isoprene, cyclopentadiene. The resulting copolymers or terpolymers contain about 85 to 99.5 percent by weight of combined isoolefin and about 0.5 to 15 percent by weight of combined multiolefin. The preparation of butyl rubber is described in U.S. Patent No. 2,356,128 which is incorporated herein by reference.

Commercially available butyl rubber is essentially a linear copolymer made up primarily of isobutene units with a few percent of randomly distributed isoprene units. When polymerized by means of a Friedel-Crafts catalyst the isoolefin and multiolefin combine, with the isoprene contributing the small amount of mono-olefinic unsaturation present in butyl rubber. The basic preparative equation is represented by:

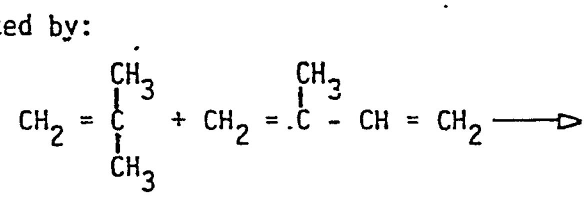

1. 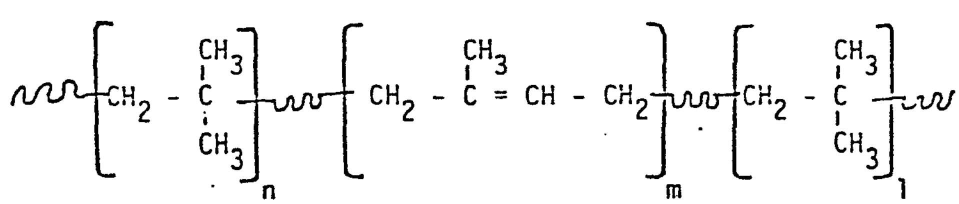

where n + 1 represents the number of isoolefin units incorporated in the butyl rubber, and m represents the number of diolefin units initially present in the copolymer, substantially as randomly distributed isolated units. When incorporated in the copolymer, for example by 1:4 addition, the isoprene loses one olefinic linkage with a shift in position of the remaining one. In early texts dealing with the chemistry of conjugated diolefins, the shift in position of the remaining olefinic linkage was termed "exaltation of the double bond," a phrase coined by Thiele in Germany.

Halogenated butyl rubber has been developed in recent years and has contributed significantly to the field of elastomers. One method for preparing halogenated butyl rubber is described in U.S. Patent No. 3,099,644, which is incorporated herein by reference. Both chlorinated and brominated butyl rubber are well known in the elastomer art. Formulae for halogenated butyl rubber may be typified by:

2. 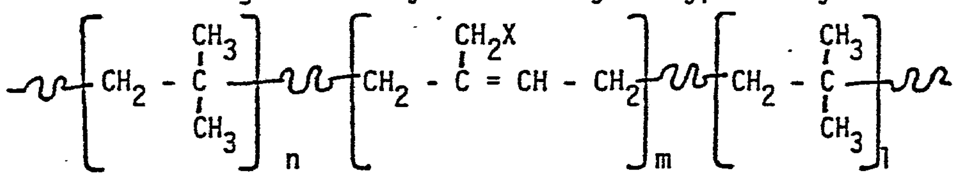

3. 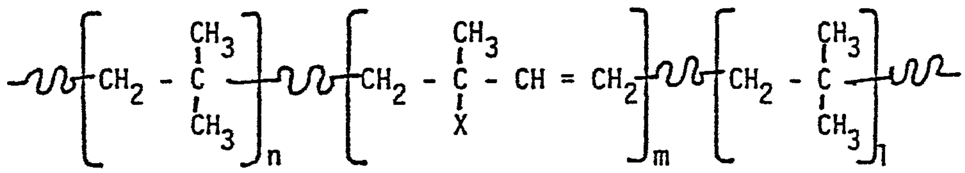

4. 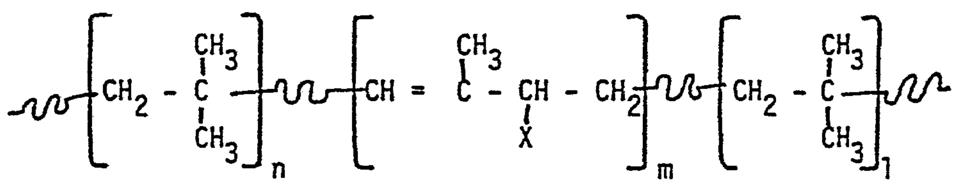

5. 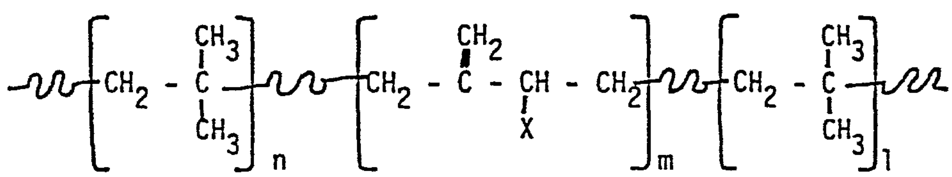

6. 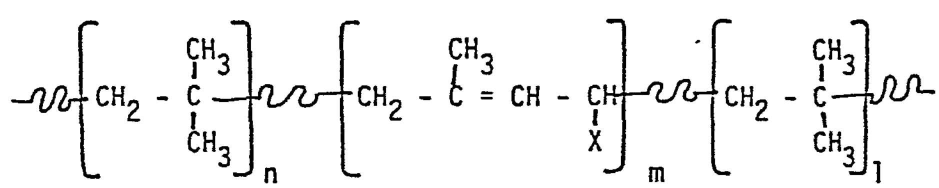

where n + 1 and M have the same values as for butyl rubber, noted above, and X is chlorine or bromine. When butyl rubber is halogenated, substitution occurs not only at secondary and tertiary carbon atoms but also to a very limited degree at primary sites. Under the conditions of dehydrohalogenation disclosed in the instant invention, primary halogens are relatively unreactive, resulting in a residual halogen content in the conjugated diene butyl, formed by dehydrohalogenation, in the range of about 0.04 to about 0.1 weight percent.

Among the structures formed on dehydrohalogenation are:

7. 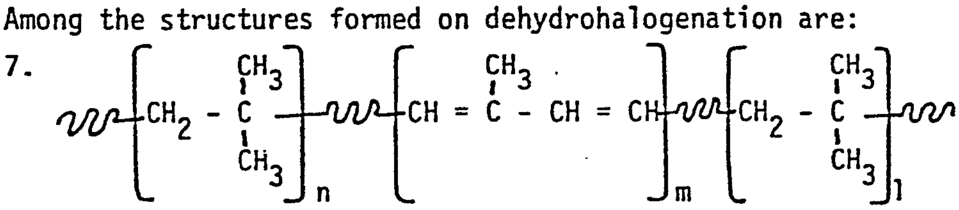 and

8. 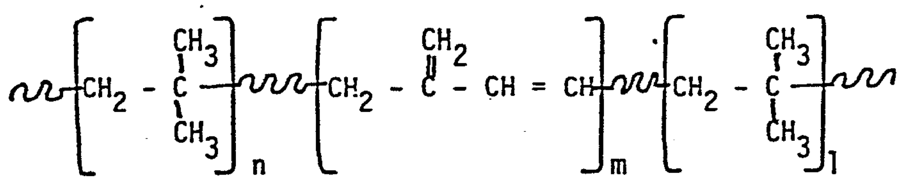

where n + 1 and m are as noted above.

While the formulae shown in 7 and 8 are representative of the structures formed when a commercial grade of halogenated butyl rubber such as Exxon Chlorobutyl HT 1068 is dehydrochlorinated, other structures may be formed, in particular when a diolefin other than isoprene is employed in the butyl synthesis. Suitable diolefins comprise piperylene, dimethyl butadiene, cyclopentadiene and 1,3-cyclohexadiene. U.S. Patent 2,577,822 which is incorporated herein by reference details the preparation of a copolymer of isobutylene and cyclopentadiene and U.S. Patent 3,080,337 which is incorporated herein by reference details the preparation of terpolymers of isobutylene, a cyclodiene and isoprene. Possible structures of the diolefin moiety in conjugated diene butyl are shown in U.S. Patent 3,965,213 which is incorporated herein by reference.

Thus the products prepared by the process of this invention include polymeric compositions of matter comprising from about 85 to 99.5 percent by weight of one or more $C_4$ to $C_7$ isoolefins and from about 15 to 0.5 percent by weight of one or more $C_4$ to $C_{14}$ randomly distributed conjugated diolefin moieties in which part or all of said

moieties have at least one double bond located in the polymer backbone chain of carbon atoms, or is in a ring of carbon atoms forming an integral part of said chain.

Various methods and reagents have been employed in the prior art to dehydrohalogenate halogenated butyl rubber for the purpose of preparing a butyl rubber containing conjugated diolefin moieties.

U.S. Patent 3,775,387 discloses a semi-homogeneous process for preparing conjugated diene butyl rubber, hereinafter referred to as CDB, in which a solution of the halogenated butyl rubber is contacted with a reaction mixture comprising: (1) a soluble metal carboxylate, where the metal is selected from Groups Ib, IIb, IVa and VIII of the Periodic Table of the Elements; (2) a soluble carboxylic acid; and (3) an oxide or hydroxide of a metal selected from Groups Ia or IIa of the Periodic Table.

U.S. Patent 3,816,371 claims CDB compositions of matter and cured compositions thereof prepared by the process disclosed in U.S. Patent 3,775,387.

U.S. Patent 3,852,253 discloses a heterogeneous process for preparing CDB from halogenated butyl rubber by contacting a solution of the halobutyl with a strong mineral acid salt of a metal selected from the metals in Groups IIa and IIb of the Periodic Table.

U.S. Patent 3,965,213 which is a continuation-in-part of U.S. Patent 3,816,371 claims compositions and cured compositions thereof of an isoolefin and a conjugated diolefin selected from the group consisting of isoprene, piperylene, dimethylbutadiene, cyclopentadiene, methylcyclopentadiene or mixtures thereof.

U.S. Patent 3,968,185 claims compositions and methods for crosslinking conjugated-diene butyl rubber catalyzed by free-radical initiators.

U.S. Patent 4,038,472 claims methods for curing conjugated-diene butyl rubber utilizing hydroquinone and an oxidizing reagent.

U.S. Patent 4,068,051 details a process for the preparation of CDB from halogenated butyl by the method of U.S. Patent 3,775,387 with the improvement of a hydrophyllic agent or purging with a drying gas.

U.S. Patents 4,145,492 and 4,211,855 claim a process for the preparation of CDB from halogenated butyl by catalytic dehydrohalogenation with supported copper oxide or chloride.

All of the above cited patents are incorporated herein by reference.

A preferred embodiment of the invention defined in the claims provides a process for the preparation of a multi-olefinic elastomeric polymer having randomly distributed conjugated diolefinic unsaturation comprises: copolymerizing one or more $C_4$ to $C_7$ acyclic alpha-isoolefins with one or more $C_4$ to $C_{14}$ acyclic or alicyclic conjugated diolefins with the aid of a Friedel-Crafts catalyst to form a polymer having randomly distributed monoolefinic double bonds, in which part or all of said double bonds are located in the chain of carbon atoms comprising the polymer backbone or are in an alicyclic ring of carbon atoms which is an integral part of said polymer backbone; substitutively halogenating said polymer in a non-reactive solvent to form a halide which is allylic to said monoolefinic double bonds; reacting a solution of the allylically halogenated polymer in a non-reactive solvent in a reaction zone with a reagent comprising the reaction product of zinc oxide or hydroxide and a $C_5$ to $C_{18}$ acyclic or alicyclic carboxylic acid, prepared in situ in said non-reactive solvent, while continuously removing water from said reaction zone by physical entrainment; and recovering a polymer, freed from inorganic and acidic constituents, which possesses random conjugated diolefin moieties in which at least one double bond of the pair of double bonds comprising the conjugated diolefin unsaturation is located in the chain of carbon atoms comprising the polymer backbone or is in an alicyclic ring forming an integral part of said backbone.

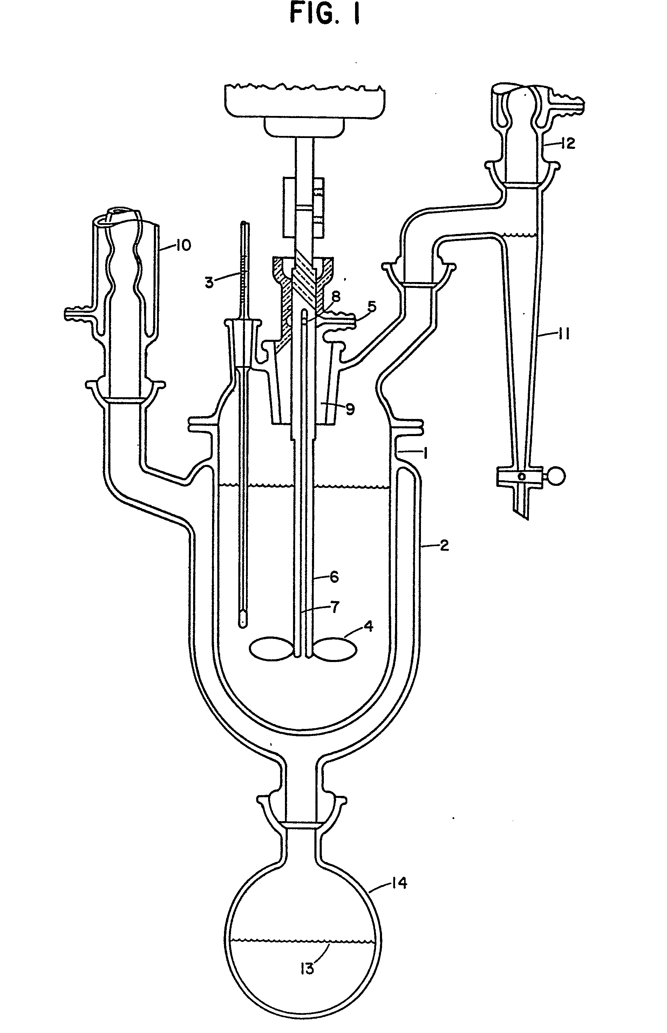

Figure 1 is an illustration of the laboratory reactor system used to carry out the process of the invention.

## DESCRIPTION OF PREFERRED EMBODIMENTS

### 1. REAGENTS

A. Acid: $C_5$ to $C_{18}$ acyclic or alicyclic carboxylic acids are suitable for the preparation of the reagent comprising the reaction product of said acids with zinc oxide or zinc hydroxide. Non-limiting examples of suitable acids include Neo-Acids such as pivalic acid, 2,2-dimethylpentanoic acid; and 2-methyl, 2-ethylhexanoic acid; straight and branched chain acids such as dodecanoic acid, stearic acid and 2-ethyl hexanoic acid; acids having both acyclic and alicyclic moieties

such as dihydrochaulmoogric acid and dihydrohydnocarpic acid; alicyclic acids such as hexahydro-p-toluic acid; 2-carboxy bicycloheptane; 2 and 4 carboxy tricyclodecane and naphthenic acids isolated from gas oils. Most preferred are saturated branched acyclic acids having from seven to thirteen carbon atoms.

B. Zinc Component: Zinc oxide or zinc hydroxide which have a fine particle size and are free of heavy metals such as lead are suitable for the practice of this invention. Preferred is zinc oxide.

C. Solvents: Acyclic and alicyclic hydrocarbons and mixtures thereof that are free of olefinic unsaturation and have a boiling point in the range of about 70°C to 175°C and aromatic hydrocarbons having a boiling point in the range of about 110°C to 180°C and mixtures with said acyclic and alicyclic hydrocarbons are suitable for the practice of this invention.

D. Halogenated Butyl Rubber: Chlorinated or brominated butyl rubber, or mixtures thereof, are suitable for the practice of this invention. Chlorobutyl HT 1068 (manufactured by Exxon Chemical Co.) having a chlorine content of 1.16 weight percent was used in the following examples.

E. Experimental Equipment: A one liter glass reactor illustrated in Figure 1 was used in the following examples. The reactor 1 is fitted with a vapor jacket 2, thermometer 3, and motor-driven stirrer 4, of which the stirrer shaft 6, has a capillary lumen 7, through which nitrogen or other inert gas may be fed to the reaction mixture through tubulature 5, and shaft opening 8. A precision ground and lapped fit between shaft 6 and bushing 9 prevents loss of reaction solvent. Vapor jacket 2 is fitted with a reflux condenser 10 and reactor 1 is fitted with a water-trap 11 and reflux condenser 12. The temperature of the reaction mixture in the reactor is maintained at a constant level by refluxing the heating medium 13, having a narrow boiling point range, contained in flask 14.

The conjugated diene butyl rubber of this invention may be cured by a variety of methods, e.g., sulfur, sulfur-containing curing agents, the latter polyfunctional dienophiles and the like, and forms also used in combination with accelerators. Monofunctional dienophiles are suitable for further modification of the rubber. Examples of polyfunctional dienophiles include m-phenylene-bis-maleimide, ethylene

glycol dimethacrylate, and trimethylol propane trimethacrylate; examples of monofunctional dienophiles include cis-2-butene diol, maleic anhydride, croton aldehyde and the like.

Conjugated diene rubber-containing compositions typically include fillers and reinforcing materials such as carbon black, fiberglass, and/or mineral fillers, extenders such as rubber processing oils, process aids, antioxidants and/or antiozonants, etc. Said compositions may also be covulcanized with other rubbers including butyl, halogenated butyl, EPDM, general purpose rubbers such as natural rubber, SBR and the like. Products manufactured from conjugated diene rubber-containing compositions are useful in a wide variety of applications including tire, automotive, electrical, mechanical, etc.

EXAMPLE 1

In order to demonstrate that the zinc must be present in the reaction mixture in a hydrocarbon-soluble form, a control run was made as follows: 732 g. of chlorobutyl HT 1068 containing 2 parts per hundred of rubber (phr) by weight of zinc oxide dissolved in 350 ml of commercial olefin-free heptane (comprised of 50 vol. % paraffins, 48 vol. % naphthenes and 2.0 vol. % aromatics) and 650 ml of Isopar G (a proprietary solvent of Exxon Chemical Co.) comprised of highly branched, olefin-free paraffins boiling in the range of about 155-175°C was charged to the reactor. The air in the reactor was displaced with nitrogen and the reaction mixture heated with stirring at 108°C for 150 minutes, using refluxing toluene in the jacket. A sample of the polymer recovered from the reaction mixture by centrifugation to separate the zinc oxide, followed by washing the supernatant cement (rubber-containing solution) with acidified aqueous-isopropyl alcohol and addition of the washed solution to a large volume of acetone, gave, on an analysis of the dried product, 1.2 wt. % of chlorine and absence of conjugated diene when examined by U.V. spectroscopy at 237 nm.

EXAMPLE 2

Example 1 was repeated with the addition of 0.55 g of 2-ethylhexanoic acid. After heating for 150 minutes at a temperature of 108°C using refluxing toluene in the jacket of the reactor, a sample of the polymer recovered from the reaction mixture as in Example 1 gave on analysis 0.21 wt. % of chlorine and 1.42 mole percent conjugated

diolefin by U.V. spectroscopy.

EXAMPLE 3

308.1 g. of a cement prepared from 35 g. of Chlorobutyl and Isopar G were charged to the reactor. The reactor jacket was charged with methylcellosolve. While stirring rapidly, 1.4 g. of zinc oxide powder was dispersed in the cement. The reactor was then heated and 0.7 g. of zinc 2-ethylhexanoate added. After 80 minutes of heating at 124-125$^{\circ}$C under nitrogen polymer was collected and analyzed as in Example 1 had 0.02 wt. percent chlorine and 1.46 mole percent conjugated diene.

EXAMPLE 4

Another experiment was run as described in Example 3 but with replacement of the zinc 2-ethylhexanoate by 0.7 g. stearic acid. After 80 minutes of heating at 124-125$^{\circ}$C under nitrogen, polymer collected as in Example 1 analyzed as containing 0.04 wt. percent chlorine and 1.37 mole percent conjugated diene.

EXAMPLE 5

Two and one-half parts of zinc oxide was milled into 100 parts of chlorobutyl HT 1068 and the resulting mixture dissolved in xylene to form a 10 percent by weight cement which was charged to the reactor. 2 parts by weight of 2-ethyl hexanoic acid was added with stirring and after purging with nitrogen the mixture was heated to 136$^{\circ}$C using refluxing xylene as the heating medium. After only 4 minutes of heating the mixture the chlorine content of a sample of the treated polymer was reduced from 1.16 weight percent to 0.11 weight percent.

EXAMPLE 6

Example 5 was repeated except that the solvent xylene was replaced with Isopar G. The mixture was heated with stirring for 40 minutes at 135$^{\circ}$C after which the dehydrochlorinated polymer was recovered as in Example 1. Analysis gave a chlorine content of 0.08 wt. percent. A determination of the solution viscosity ratio of the recovered product at a concentration of 0.5 mg/ml in dimer (a mixture 2,2,4-trimethyl pentene-1 and 2,2,4-trimethylpentene-2) gave a result of 0.803/0.745 compared to the feed chlorobutyl HT 1068 of 0.805/0.747.

Following recovery and drying, twenty-five parts of the dehydrohalogenated product was compounded on a rubber mill with 12.5 parts of SRF Black, 0.25 parts stearic acid, 0.25 parts of AgeRite White

(an antioxidant consisting of dibetanaphthyl-p-phenylene diamine) and 0.50 parts of SR-350 (a vulcanizing agent consisting of trimethylolpropane trimethacrylate) and pads of the compound were cured at 340°F for 30 minutes, 60 minutes and 120 minutes. The pads were tested in toluene for solubility and swell ratio.

The results obtained were as follows:

| Cure Time | Swell Ratio | % Insoluble |
|---|---|---|
| 30 min. | 4.47 | 91.0 |
| 60 min. | 3.47 | 94.3 |
| 120 min. | 3.07 | 93.8 |

This Example shows that aliphatic solvents may be employed for the dehydrohalogenation of a halobutyl rubber when a reagent comprising zinc oxide and a hydrocarbon-soluble acid are reacted in situ with a halobutyl.

EXAMPLE 7

While water is the normal by-product of the reaction of zinc oxide or hydroxide with the acids useful for the practice of this invention, the presence of water in the reaction mixture can severely inhibit or prevent reaction from occuring between the halobutyl and the reaction product of the zinc and acid reagents.

Where the zinc component, e.g., zinc oxide, is admixed with the halobutyl on a mill prior to solvation to form a cement, or the zinc component is dispersed in a previously formed cement, the cement may be rendered free of moisture by purging with dry nitrogen or other inert gas, or the cement may be heated to form solvent-water azeotrope boiling below 100°C which is then taken overhead for collection in a trap. Where the solvent is relatively high boiling, such as the Isopar G used in Example 6, a small quantity of a low boiling material, such as benzene, may be added to the cement to take overhead an azeotrope boiling at 69.4°C containing 8.9% of water. Examples of other water entraining hydrocarbons are hexane, which forms an azeotrope at 61.6°C containing 5.6% of water, and heptane, which forms an azeotrope boiling at 79.2°C containing 12.9% of water. The following run illustrates the negative effect of water in the system.

A xylene cement was prepared to contain zinc oxide and chlorobutyl 1068 at a concentration of about 60 g. in 700 ml of cement. To 350 ml. of the cement were added 2 ml. of water and 0.3 g. of 2-ethyl-

hexanoic acid. The cement was heated for 80 minutes at 107°C using refluxing toluene in the jacket. Since xylene forms an azeotrope boiling at 94.5°C containing 40% water, the trap was omitted, and the reflux condenser fitted directly to the reactor. Water collected in the free space of the reactor and condensed on the glass. A sample of polymer recovered from the reaction mixture and analyzed contained 0.81 wt. % chlorine.

The run was repeated with the remaining 350 ml. of cement with omission of the water and flushing of the cement for 0.5 hour with nitrogen prior to addition of the acid. After 80 minutes of heating at 106-107°C, during which nitrogen was fed to the reactor, a sample of polymer recovered from the reaction mixture gave, on analysis, 0.05 wt. % of chlorine.

It has been observed that when zinc oxide is reacted with a carboxylic acid, with the addition of a small amount of water to initiate the reaction, in situ in a hydrocarbon medium, that the zinc carboxylate formed under these conditions is best reported as having the formula $Zn_2(O-\overset{O}{\overset{\|}{C}}-R)_3OH$ or $Zn_4O(R-\overset{O}{\overset{\|}{C}}-O)_6$ rather than $Zn(O-\overset{O}{\overset{\|}{C}}-R)_2$ which is formed when a sodium or potassium carboxylate is reacted in aqueous solution with zinc chloride or zinc sulfate. The former product is more highly colored than the normal zinc salt and is of lower viscosity when both are prepared from 2-ethylhexanoic acid. Both zinc reagents perform satisfactorily in the instant process and use of the term zinc carboxylate is intended to refer to either or both.

CLAIMS:

1. A process for producing a multi-olefinic elastomeric polymer having randomly distributed conjugated-diolefinic unsaturation comprising:

a. Copolymerizing one or more $C_4$-$C_7$ acyclic alpha isoolefins with one or more $C_4$-$C_{14}$ acyclic or alicyclic diolefins with the aid of a Friedel-Crafts catalyst to form a polymer having randomly distributed monoolefinic unsaturation;

b. Substitutively halogenating the polymer in a non-reactive solvent to form a halide which is allylic to the monoolefinic unsaturation;

c. Reacting a hydrocarbon cement of the halogenated polymer with a reagent comprising the reaction product of a zinc component selected from the group consisting of zinc oxide and zinc hydroxide, and a $C_5$-$C_{18}$ carboxylic acid, in a reaction zone, while continuously removing water from said reaction zone; and

d. Recovering a polymer, freed from inorganic and acidic constituents, which possesses randomly distributed conjugated diolefin functionality in which at least one double bond of the pair of double bonds comprising the conjugated diolefinic unsaturation is located in the chain of carbon atoms comprising the polymer backbone, or is in a ring of carbon atoms integral with said chain of carbon atoms.

2. Process according to claim 1 wherein said alpha-isoolefin is isobutene.

3. Process according to claim 1 or 2 wherein said acyclic diolefin is isoprene.

4. Process according to claim 1, 2 or 3 wherein said allylic halide is chloride.

5. Process according to claim 1, 2 or 3 wherein said allylic halide is bromide.

6. Process according to any one of the preceding claims wherein the zinc carboxylate reaction product is prepared in situ in the cement.

7. Process according to any one of the preceding claims wherein the removal of water is accomplished by azeotropic distillation.

8. Process according to any one of claims 1 to 6 wherein the removal of water is accomplished by physical entrainment with a hydrocarbon.

9. Process according to any one of claims 1 to 6 wherein the removal of water is accomplished by continuous purging with an inert gas.

10. Process according to any one of the preceding claims wherein said $C_5$-$C_{18}$ carboxylic acid is selected from the group consisting of neo-acids, straight and branched chain acids, acids having both acyclic and alicyclic moieties and alicyclic acids.

11. Process according to any one of claims 1 to 9 wherein said $C_5$-$C_{18}$ carboxylic acid is selected from $C_7$-$C_{13}$ saturated, branched acyclic acids.

12. A process for producing a multi-olefinic elastomeric polymer having randomly distributed conjugated-diolefinic unsaturation which comprises reacting halogenated butyl rubber with zinc $C_5$-$C_{18}$ carboxylate under anhydrous conditions in a hydrocarbon cement to dehydrohalogenate the rubber and form a product mixture comprising the desired polymer, and recovering the desired polymer from the product mixture.

13. A process according to claim 12 wherein the zinc carboxylate is formed in situ by reaction of zinc oxide or zinc hydroxide with a $C_5$-$C_{18}$ carboxylic acid and water is continuously removed from the reaction mixture.

FIG. 1